# EUROPÄISCHE PATENTSCHRIFT

(11) **EP 4 072 932 B1**
(45) Veröffentlichungstag und Bekanntmachung des Hinweises auf die Patenterteilung: **17.07.2024**
(21) Anmeldenummer: 20833736.0
(22) Anmeldetag: 10.12.2020
(51) Int. Cl.: B62K 11/14, B62K 23/02, G01D 11/24, G01D 5/14

(54) **E-GAS MIT INTEGRIERTEM SCHALTERBLOCK**
E-THROTTLE HAVING INTEGRATED SWITCH BLOCK
ACCÉLÉRATEUR ÉLECTRONIQUE COMPRENANT UN BLOC DE COMMUTATION INTÉGRÉ

(30) Priorität: 10.12.2019 DE 102019133710
(43) Veröffentlichungstag der Anmeldung: 19.10.2022
(73) Patentinhaber: Hirschmann Automotive GmbH, 6830 Rankweil/Brederis (AT)
(72) Erfinder: GROHS, Thomas, 6774 Tschagguns (AT); MÄHR, Dietmar, 6822 Düns (AT); PRIMOSCH, Michael, 6800 Feldkirch (AT)
(74) Vertreter: Greif, Thomas
(86) Internationale Anmeldenummer: PCT/EP2020/085584
(87) Internationale Veröffentlichungsnummer: WO 2021/116313

(56) Entgegenhaltungen:
- EP-A1- 3 747 750
- EP-A1- 3 865 386
- WO-A1-2005/108197
- WO-A2-2020/178861
- DE-A1- 102010 013 686
- DE-A1- 102010 053 050
- JP-A- 2005 041 259
- US-A1- 2009 201 014
- US-A1- 2011 036 196

## Beschreibung

Die Erfindung betrifft einen Handgasdrehgriff mit einer in einem Gehäuse gelagerten Sensoranordnung zur Erfassung der Drehbewegung eines röhrenförmigen Drehgriffes, mit einem Magneten, der mit dem Drehgriff in Wirkverbindung steht, mit einem gehäusefesten Sensor, ausgebildet zur Erfassung der Bewegung des Magneten, wobei der Sensor mit einem Kabelbaum in Verbindung steht, und mit einer Rückstellfeder, deren Federkraft der von Hand erzeugten Drehbewegung entgegen gerichtet ist, gemäß den Merkmalen des Oberbegriffes des Patentanspruches 1.

Ein derartiger Handgasdrehgriff ist aus der EP 2 507 592 B1 bekannt. Dabei sind die Bauteile so ausgebildet, dass sie in Achsrichtung des Drehgriffes zusammengefügt werden und entsprechend ausgerichtete Fügefugen aufweisen. Es hat sich gezeigt, dass der kurze Bauraum, der sich an den Drehgriff anschließt, nicht ausreicht, um die benötigten Bauelemente, zum Beispiel den Sensor und eine Abschirmung sowie einen Schalter, betriebssicher und umweltgeschützt unterzubringen.

Ein weiterer Handgasdrehgriff ist aus der WO 2005/108197 A1 bekannt.

Der Erfindung liegt daher die Aufgabe zugrunde, einen Handgasdrehgriff der eingangs beschriebenen Gattung dahingehend zu verbessern, dass in dem vorgesehenen Gehäuse hinreichender Bauraum zur Verfügung steht, der einfach gegen Umwelteinflüsse geschützt ausgebildet werden kann.

Diese Aufgabe ist durch die Merkmale des Patentanspruches 1 gelöst.

Erfindungsgemäß ist vorgesehen, dass der Magnet an einem Stützelement fixiert und das Stützelement mit Abstand zum Drehgriff angeordnet ist, dass dem Magneten beziehungsweise dem Stützelement ein Gehäuseteil zugeordnet ist und dass dieses Gehäuseteil zur Aufnahme des Sensors, einer Leiterplatte und des Endes des Kabelbaumes dient. Weiterhin wird vorgeschlagen, dass zwischen dem Gehäuseteil und dem Ende des Drehgriffs ein Zusatzgehäuseteil vorgesehen ist, das zur Aufnahme einer Schaltereinheit dient. Dadurch liegt der Schalter griffgünstig dem Drehgriff benachbart. Das Gehäuseteil und das Zusatzgehäuseteil sind in Achsrichtung des Drehgriffes gesehen einstückig ausgeführt. Durch diese Ausgestaltung steht dem Messsystem ausreichender Bauraum zur Verfügung, der gut abgedichtet und geschützt werden kann.

Weiterhin wird vorgeschlagen, dass das Gehäuse mit Gehäuseteil und Zusatzgehäuseteil parallel zur Drehachse des Drehgriffes geteilt und aneinander befestigbar ausgebildet ist. Dadurch ist das vertikal nach oben angeordnete Gehäuseoberteil mit Gehäuseteil und Zusatzgehäuseteil komplett einstückig ausgeführt.

Weiterhin wird vorgeschlagen, dass der Sensor auf der Leiterplatte angeordnet ist und dass das Gehäuseteil und/oder das Zusatzgehäuseteil im Bereich des ebenfalls einstückig ausgeführten Gehäuseunterteils eine Radialerweiterung mit einer axial zugänglichen Öffnung aufweist. Diese Radialerweiterung ist auf der Unterseite des Drehgriffes angeordnet und somit geschützt. Die Radialerweiterung weist vorzugsweise Führungselemente zur Aufnahme der Leiterplatte und gegebenenfalls eines Abschirmelements auf, wobei auch das Ende des Kabelbaumes in dieser Radialerweiterung untergebracht werden kann. Die Öffnung der Radialerweiterung kann mittels eines Dichtelements verschlossen werden.

In weiterer Ausgestaltung der Erfindung wird auf die Zeichnungen verwiesen, in denen ein Ausführungsbeispiel der Erfindung dargestellt ist.

Es zeigen:
- Figur 1:: eine perspektivische Komplettansicht eines Handgasdrehgriffes im Endzustand,
- Figur 2:: einen Drehgriff als Einzelbauteil mit angebautem Stützelement und Magneten,
- Figur 3:: ein Gehäuseoberteil als Einzelbauteil,
- Figur 4:: ein Gehäuseunterteil als Einzelbauteil,
- Figur 5:: eine Schaltereinheit als Einzelbauteil,
- Figur 6:: das Gehäuseoberteil als Einzelbauteil mit eingebauter Schalteinheit,
- Figur 7:: einen Kabelbaum mit angelöteter Leiterplatte und
- Figur 8:: ein Gehäuseunterteil als Einzelbauteil mit eingebauter Leiterplatte und Kabelbaumende.

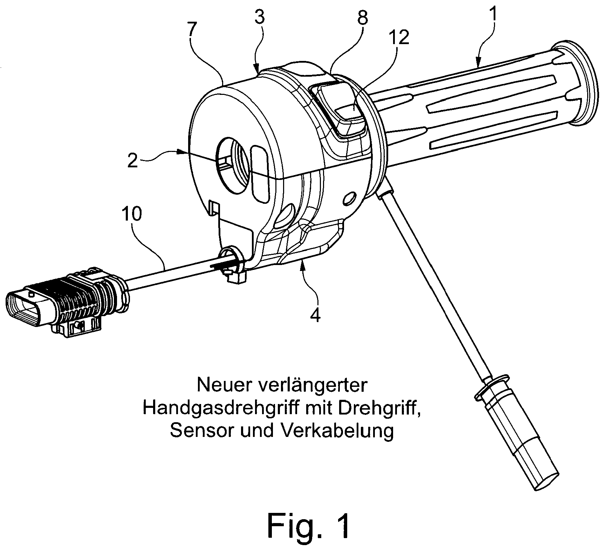

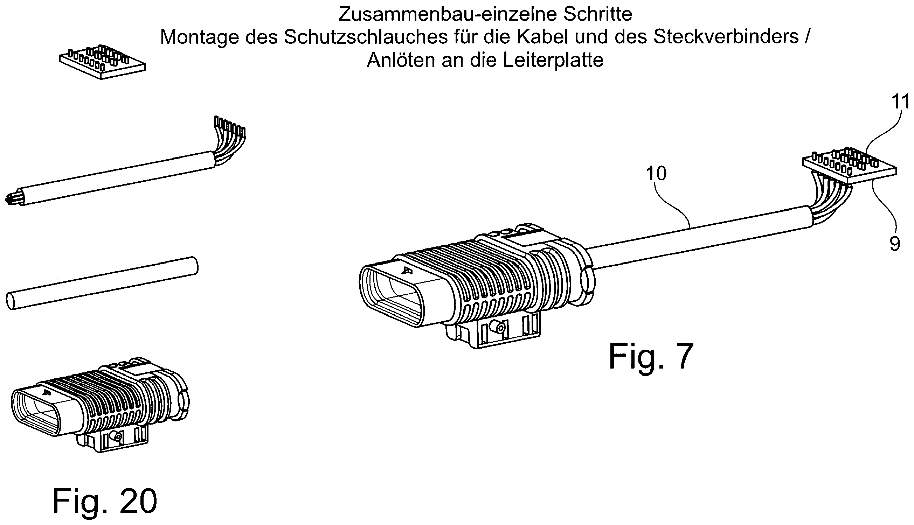

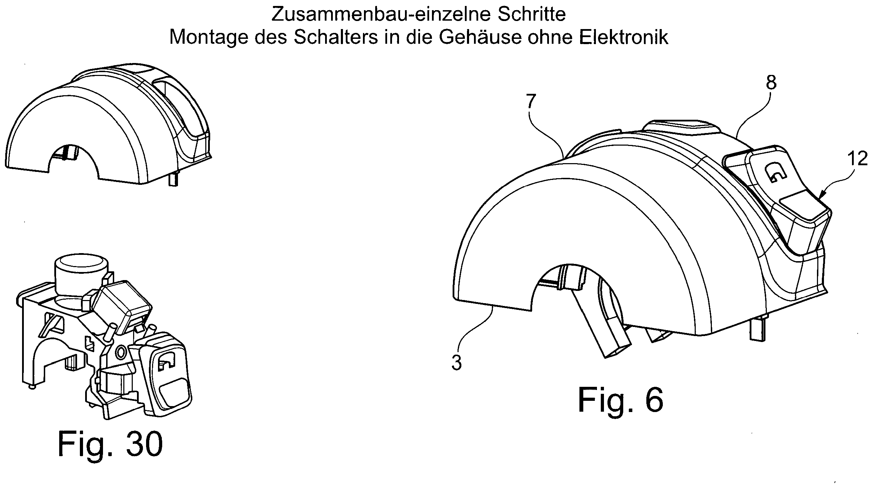

Die Figuren 1 bis 8 sind zwecks besserem Verständnis mit Bezugsziffern versehen und im Folgenden im Detail erläutert.

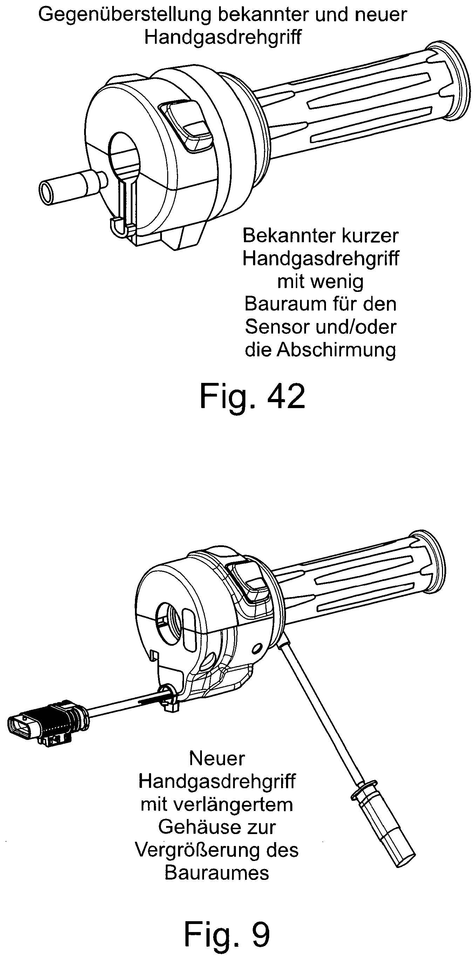

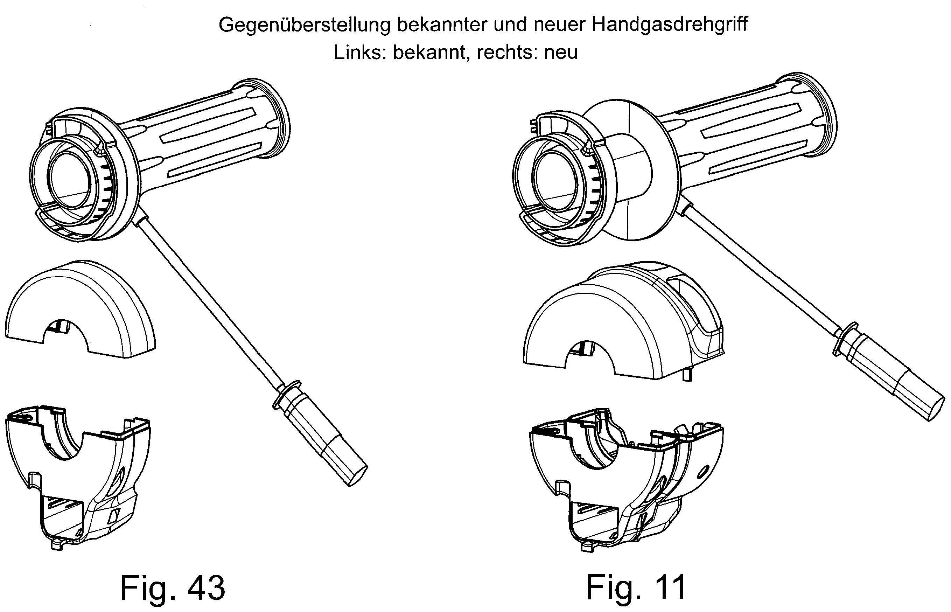

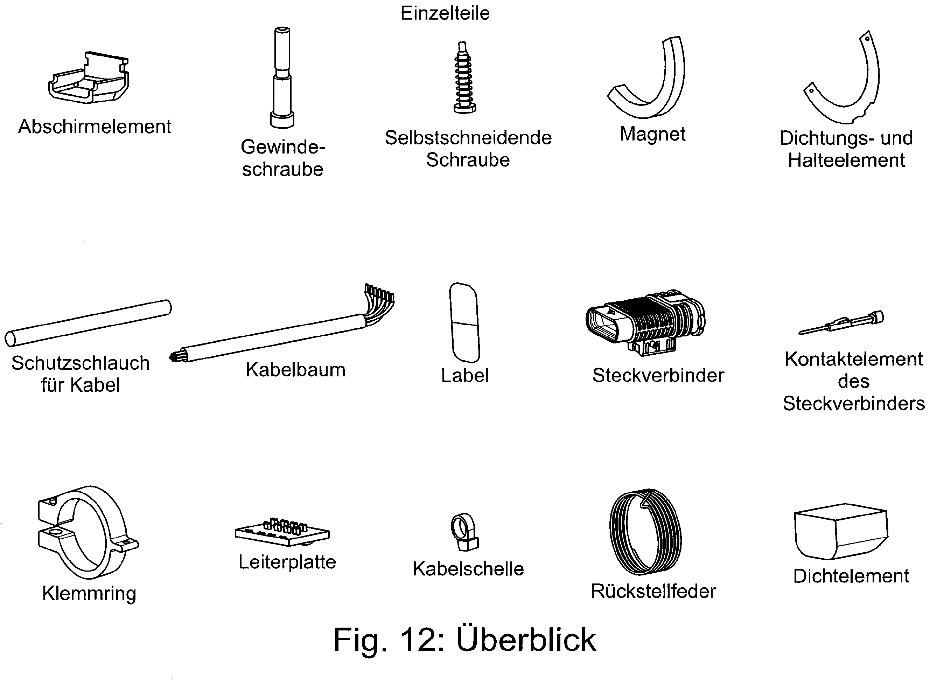

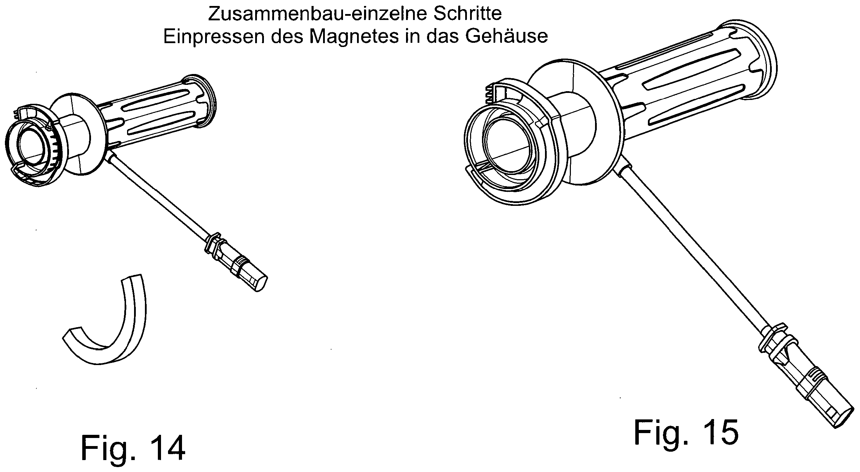

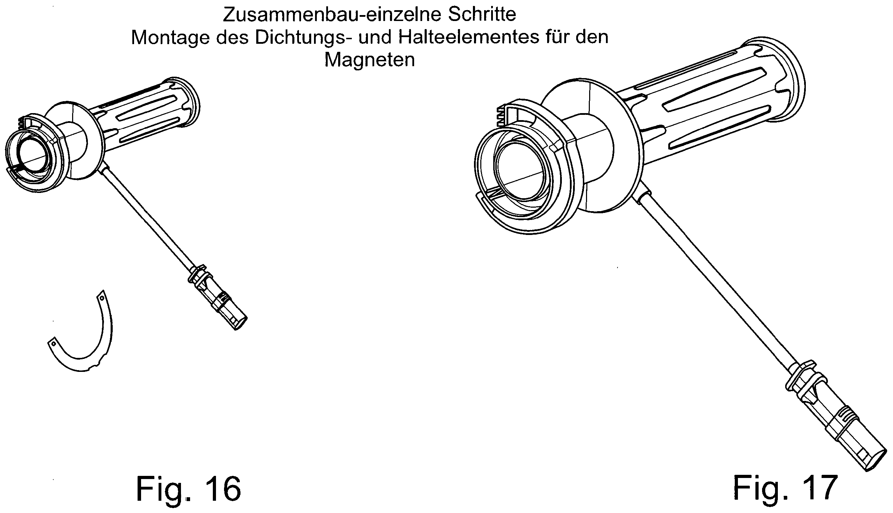

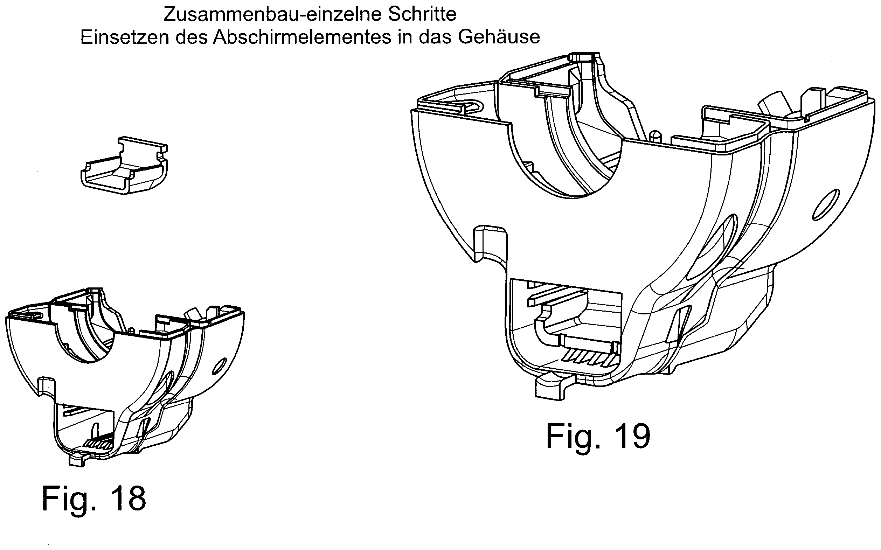

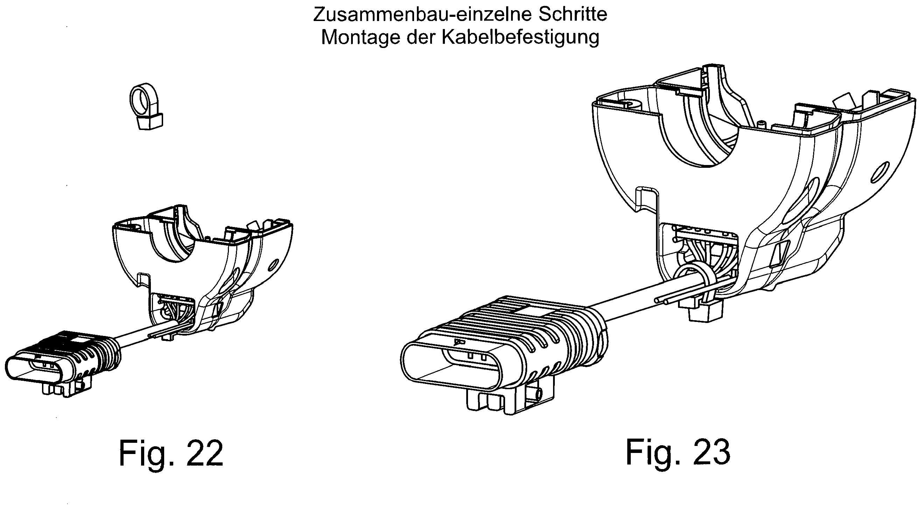

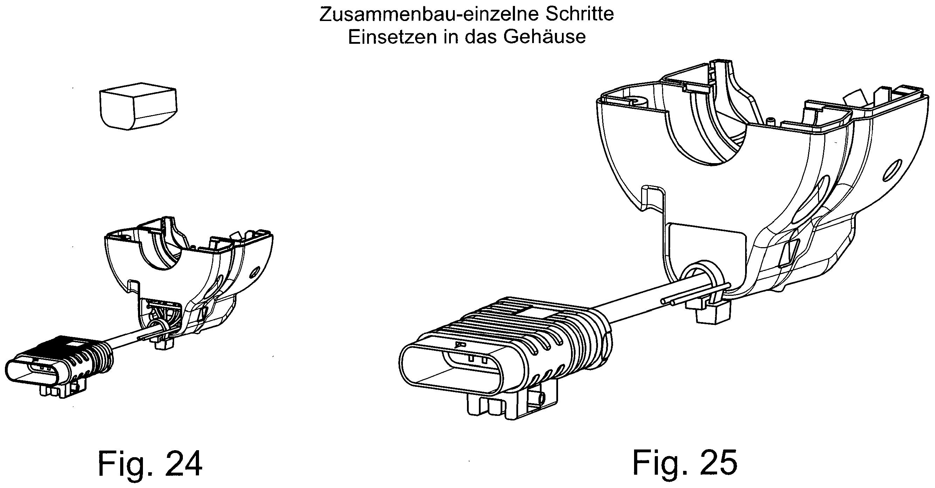

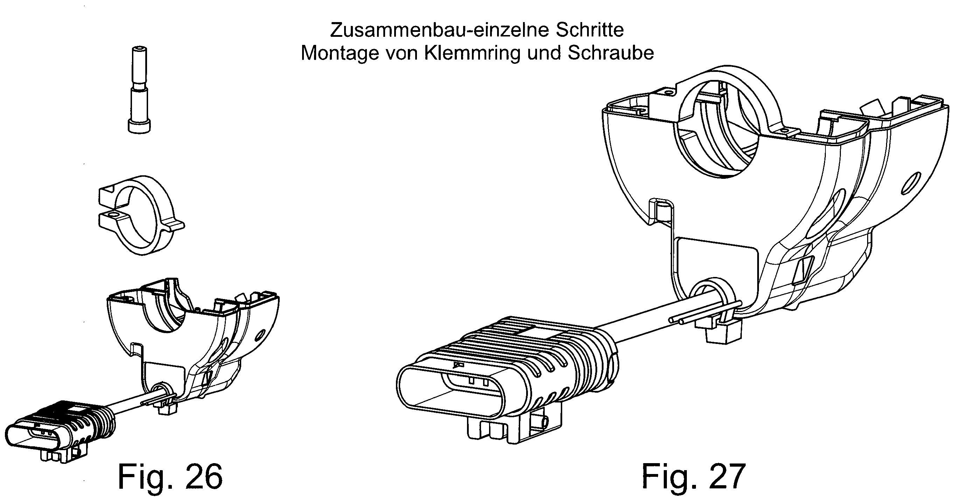

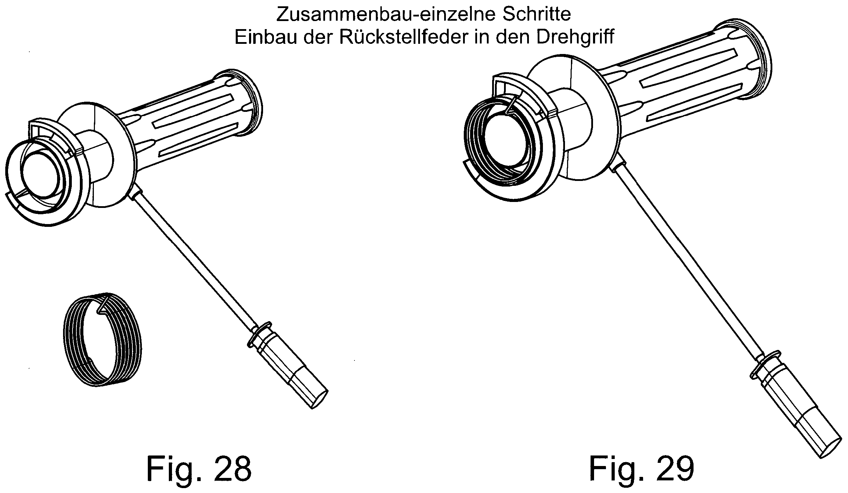

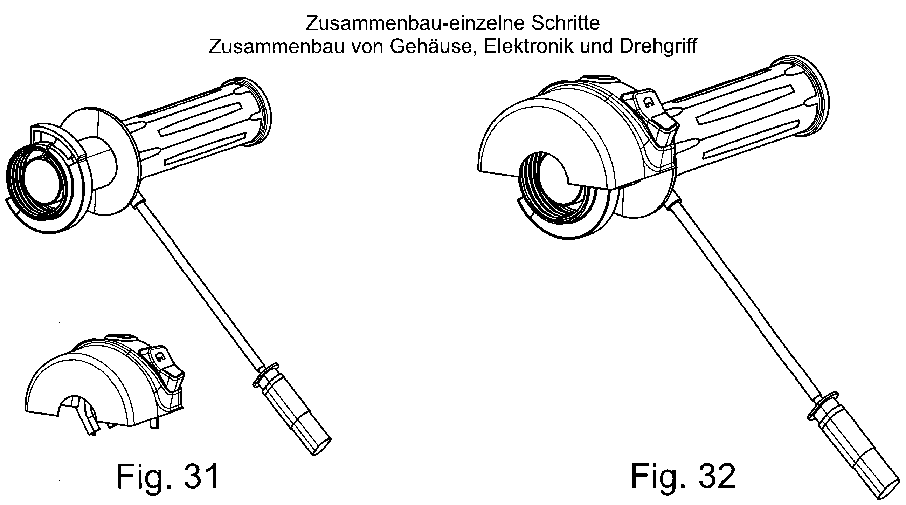

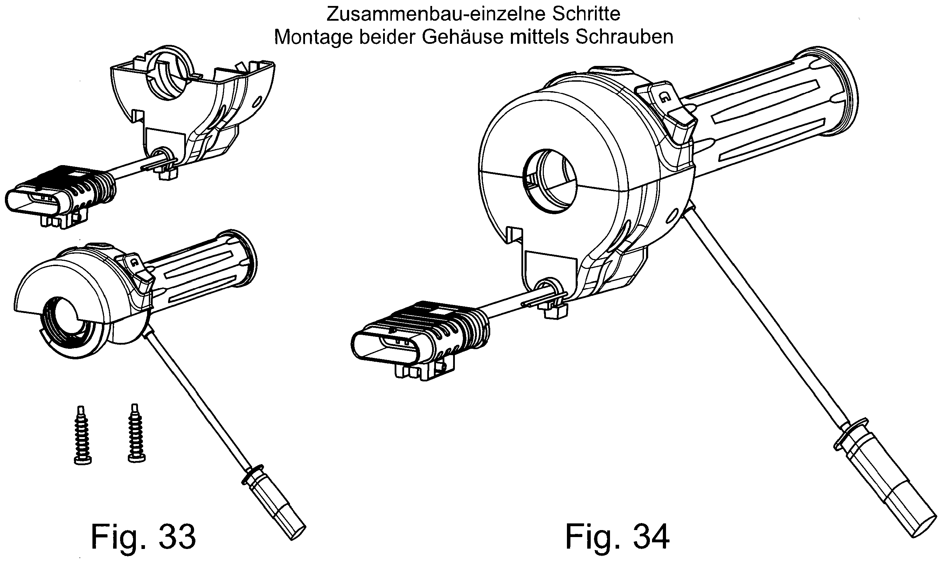

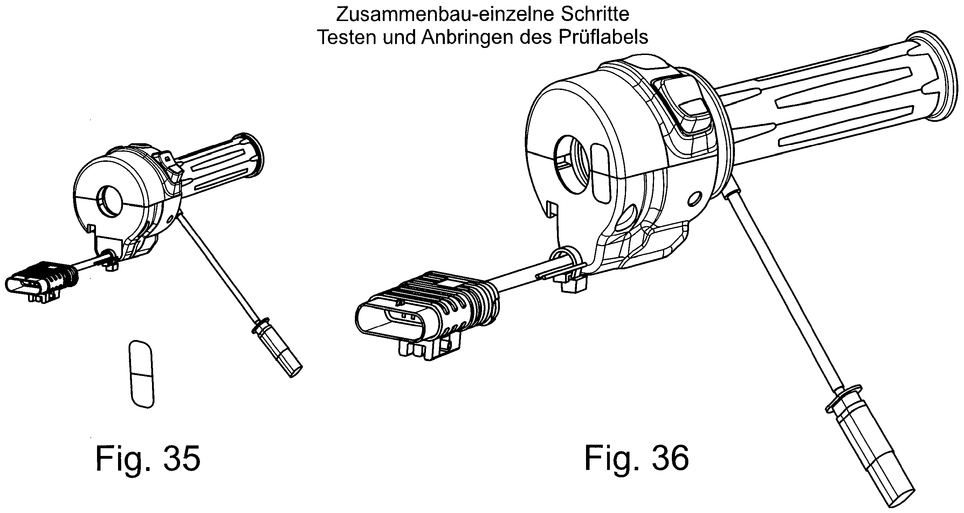

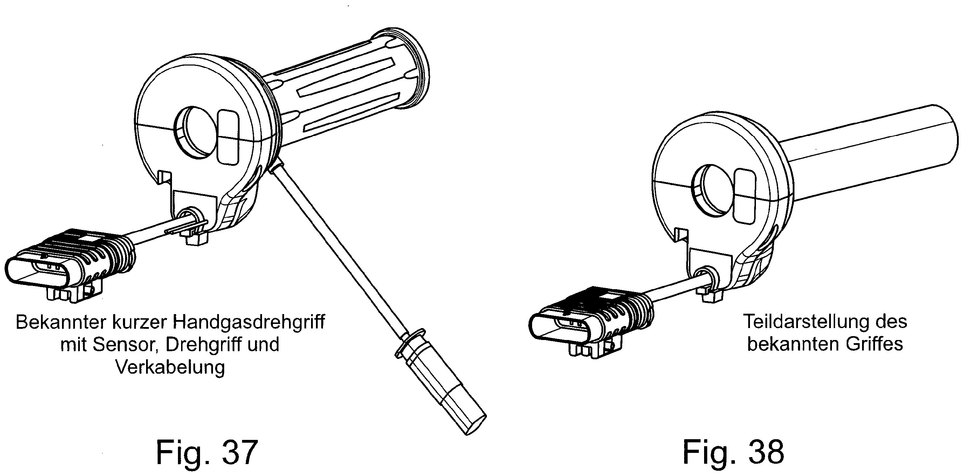

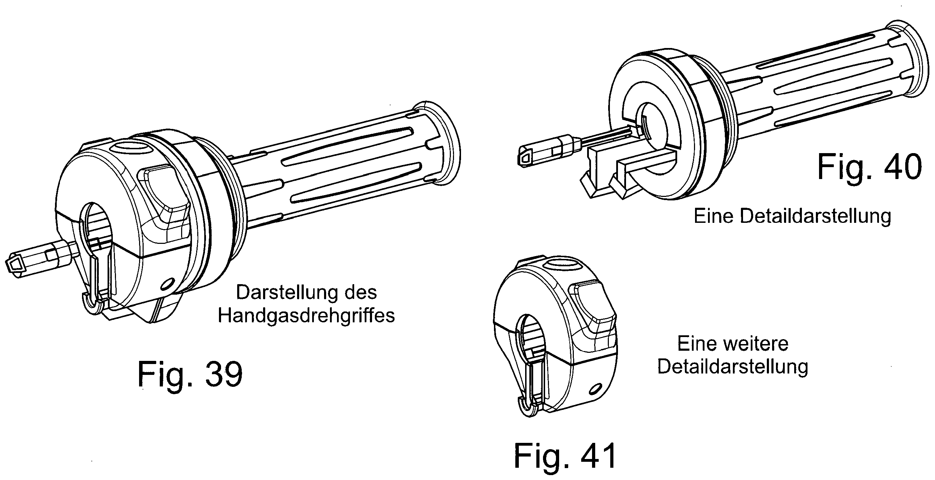

Darüber hinaus zeigen die Figuren 9 bis 36 den Drehgriff (Handgasdrehgriff) nach der Erfindung in weiteren Details (ohne Bezugsziffern) sowie Schritte des Zusammenbaus und eine Übersicht der erforderlichen Elemente des Drehgriffes (Figur 12). In den Figuren 37 bis 42 ist ein Drehgriff nach dem Stand der Technik dargestellt.

In den Figuren 1 bis 8 ist, soweit im Einzelnen dargestellt, mit der Bezugsziffer 1 ein Drehgriff bezeichnet, an den sich ein Gehäuse 2 anschließt, in dem eine Sensoranordnung eingebaut ist. Das Gehäuse 2 ist in ein Gehäuseoberteil 3 und ein Gehäuseunterteil 4 aufgeteilt, wobei das Gehäuseoberteil 3 und das Gehäuseunterteil 4 miteinander verschraubt werden können.

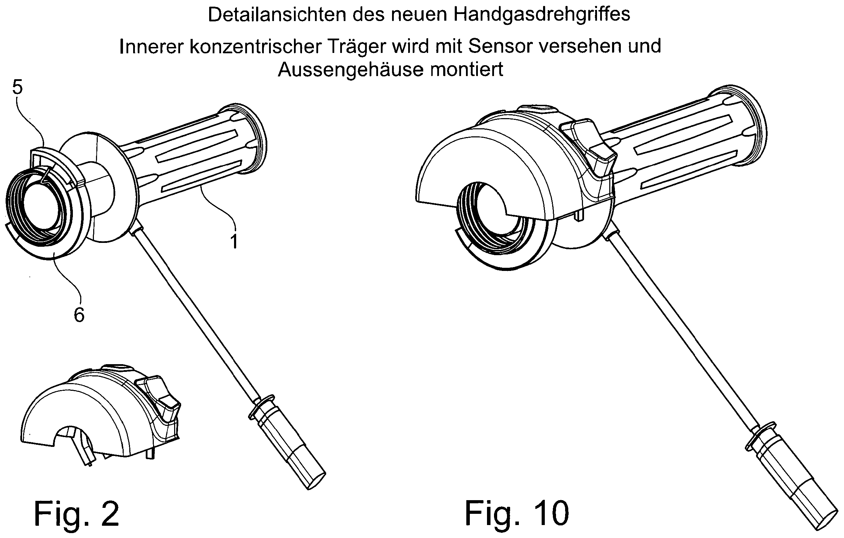

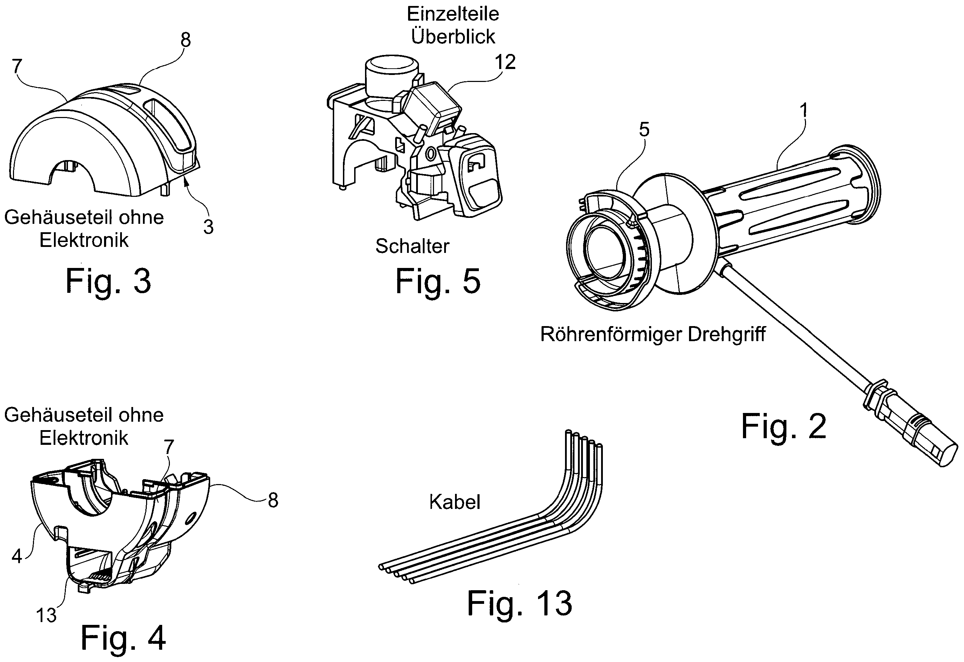

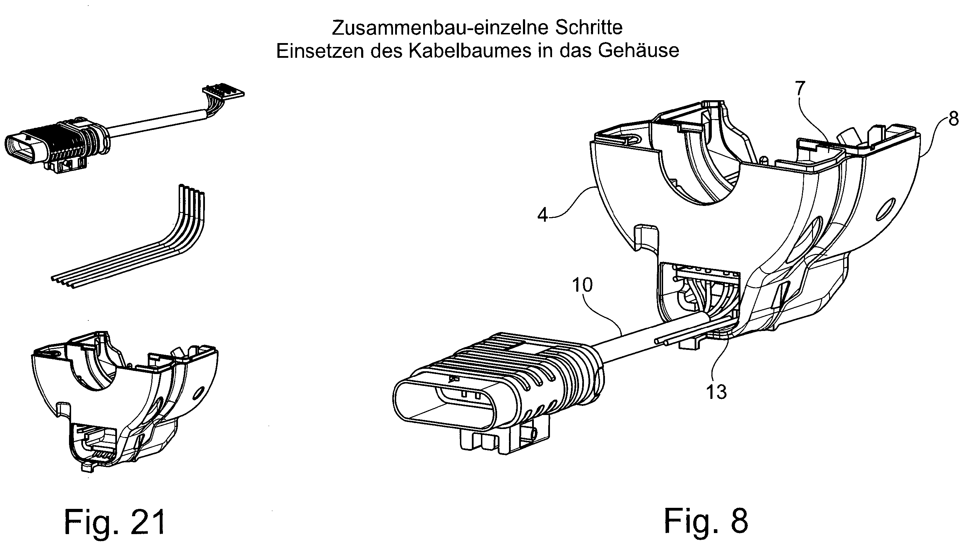

Wie insbesondere Figur 2 zu entnehmen ist, ist das Rohr des Drehgriffes 1 verlängert und weist in der Nähe seines Endes ein Stützelement 5 auf, an dem ein Magnet 6 befestigt ist, der kreisbogenförmig ausgeführt ist. Das Gehäuse 2 mit Gehäuseoberteil 3 und Gehäuseunterteil 4 ist in Axialrichtung des Drehgriffes 1 in ein Gehäuseteil 7 und ein Zusatzgehäuseteil 8 unterteilt. In dem Gehäuseteil 7 ist das Stützelement 5 mit dem Magneten 6 und eine Leiterplatte 9, die mit dem Ende eines Kabelbaumes 10 verbunden ist, eingebaut. Die Leiterplatte 9 beinhaltet auch einen Sensor 11, wobei die Leiterplatte 9 so in das Gehäuseteil 7 eingebaut ist, dass der Sensor 11 mit dem Magneten 6 in Wirkverbindung steht. In dem Zusatzgehäuseteil 8 ist ein in Figur 5 dargestellte Schaltereinheit 12 eingebaut. Wie insbesondere den Figuren 3.4.6 und 8 zu entnehmen ist, das Gehäuseteil 7 und das Zusatzgehäuseteil 8 durch eine Zwischenwand voneinander getrennt.

Das Gehäuseunterteil 4 weist eine Radialerweiterung 13 auf, in der Führungselemente 14 eingearbeitet sind. Die Führungselemente 14 dienen zur Führung der Leiterplatte 9 und zur Aufnahme eines Abschirmelements. Die Radialerweiterung reicht in axialer Richtung des Drehgriffes 1 gesehen zumindest bis zum Ende des Gehäuseteils 7 und weist eine axiale Öffnung 15 auf, die mittels eines Dichtelements verschlossen werden kann.

Bezüglich weiterer Details und der Schritte des Zusammenbaus der beteiligten Elemente wird auf die übrigen zugehörigen Figuren verwiesen.

### Bezugszeichenliste

- 1: Drehgriff
- 2: Gehäuse
- 3: Gehäuseoberteil
- 4: Gehäuseunterteil
- 5: Stützelement
- 6: Magnet
- 7: Gehäuseteil
- 8: Zusatzgehäuseteil
- 9: Leiterplatte
- 10: Kabelbaum
- 11: Sensor
- 12: Schaltereinheit
- 13: Radialerweiterung
- 14: Führungselement
- 15: Öffnung

## Patentansprüche

1. Vorrichtung, aufweisend
- ein Gehäuse (2),
- einen röhrenförmigen Drehgriff (1),
- ein Stützelement (5),
- ein Gehäuseteil (7),
- eine Leiterplatte (9),
- ein Zusatzgehäuseteil (8),
- eine Schaltereinheit (12),
- ein Gehäuseoberteil (3),
- ein Gehäuseunterteil (4) und
- einen
Handgasdrehgriff mit einer in dem Gehäuse (2) gelagerten Sensoranordnung zur Erfassung der Drehbewegung des röhrenförmigen Drehgriffes (1), weiterhin mit einem Magneten (6), der mit dem Drehgriff (1) in Wirkverbindung steht, weiterhin mit einem gehäusefesten Sensor (11), ausgebildet zur Erfassung der Bewegung des Magneten (6), wobei der Sensor (11) mit einem Kabelbaum (10) der Vorrichtung in Verbindung steht, und mit einer Rückstellfeder, deren Federkraft der von Hand erzeugten Drehbewegung entgegen gerichtet ist, wobei der Magnet (6) an dem Stützelement (5) fixiert und das Stützelement (5) mit Abstand zum Drehgriff (1) angeordnet ist, wobei dem Magneten (6) bzw. dem Stützelement (5) das Gehäuseteil (7) zugeordnet ist und wobei dieses Gehäuseteil (7) auch zur Aufnahme des Sensors (11), der Leiterplatte: (9) und des Endes des Kabelbaumes (10) ausgebildet ist, wobei sich zwischen dem Gehäuseteil (7) und dem Ende des Drehgriffes (1) das Zusatzgehäuseteil (8) befindet, das zur Aufnahme der Schaltereinheit (12) ausgebildet ist, wobei weiterhin das Gehäuse (2) mit Gehäuseteil (7) und dem Zusatzgehäuseteil (8) parallel zur Drehachse des Drehgriffes (1) in das Gehäuseoberteil (3) und das Gehäuseunterteil (4) geteilt und aneinander befestigt sowie an dem Stützelement (5) gestützt sind.

2. Vorrichtung nach Anspruch 1, **dadurch gekennzeichnet, dass der** Sensor (11) auf der Leiterplatte (9) angeordnet ist.

3. Vorrichtung nach einem der vorhergehenden Ansprüche, **dadurch gekennzeichnet, dass** das Gehäuseteil (7) und/oder das Zusatzgehäuseteil (8) im Bereich des Gehäuseunterteils (4) eine Radialerweiterung (13) mit einer axial zugänglichen Öffnung (15) aufweist.

4. Vorrichtung nach einem der vorhergehenden Ansprüche, **dadurch gekennzeichnet, dass** die Radialerweiterung (13) Führungselemente (14) zur Aufnahme der Leiterplatte (9) und eines Abschirmelements aufweist.

5. Vorrichtung nach einem der vorhergehenden Ansprüche, **dadurch gekennzeichnet, dass** die Öffnung (15) mittels eines Dichtelements verschließbar ist.

## Claims

1. Device having
- a housing (2),
- a tubular twist grip (1),
- a support element (5),
- a housing part (7),
- a printed circuit board (9),
- an auxiliary housing part (8),
- a switch unit (12),
- a housing upper part (3),
- a housing lower part (4) and
- a manual throttle twist grip having a sensor arrangement, which is mounted in the housing (2), for detecting the rotary motion of the tubular twist grip (1), further having a magnet (6) which is operatively connected to the twist grip (1), further having a sensor (11) which is fixed to the housing and is designed to detect the movement of the magnet (6), wherein the sensor (11) is connected to a cable harness (10) of the device, and having a return spring, the spring force of which is directed against the manually generated rotary motion, wherein the magnet (6) is fixed to the support element (5) and the support element (5) is arranged at a distance from the twist grip (1), wherein the housing part (7) is associated with the magnet (6) and, respectively, the support element (5), and wherein this housing part (7) is also designed for receiving the sensor (11), the printed circuit board (9) and the end of the cable harness (10), wherein the auxiliary housing part (8) is located between the housing part (7) and the end of the twist grip (1) and is designed to receive the switch unit (12), wherein furthermore the housing (2) comprising the housing part (7) and the auxiliary housing part (8) is split parallel to the rotation axis of the twist grip (1) into the housing upper part (3) and the housing lower part (4) which are fastened to each other and also supported on the support element (5).

2. Device according to Claim 1, **characterized in that** the sensor (11) is arranged on the printed circuit board (9) .

3. Device according to either of the preceding claims, **characterized in that** the housing part (7) and/or the auxiliary housing part (8) have/has a radial widened portion (13), having an axially accessible opening (15), in the region of the housing lower part (4).

4. Device according to any of the preceding claims, **characterized in that** the radial widened portion (13) has guide elements (14) for receiving the printed circuit board (9) and a shielding element.

5. Device according to any of the preceding claims, **characterized in that** the opening (15) can be closed by means of a sealing element.

## Revendications

1. Dispositif, présentant
- un boîtier (2),
- une poignée tournante tubulaire (1),
- un élément d'appui (5),
- une partie de boîtier (7),
- une carte de circuits imprimés (9),
- une partie de boîtier supplémentaire (8),
- une unité de commutation (12),
- une partie de boîtier supérieure (3),
- une partie de boîtier inférieure (4), et
- une poignée tournante d'accélérateur manuel comprenant un ensemble de capteur monté dans le boîtier (2) pour détecter le mouvement rotatif de la poignée tournante tubulaire (1), en outre un aimant (6) qui est en relation fonctionnelle avec la poignée tournante (1), en outre un capteur (11) solidaire du boîtier et réalisé pour détecter le mouvement de l'aimant (6), dans lequel le capteur (11) est en communication avec un faisceau de câbles (10) du dispositif, et un ressort de rappel dont la force de ressort est orientée à l'encontre du mouvement rotatif généré manuellement, dans lequel l'aimant (6) est fixé à l'élément d'appui (5), et l'élément d'appui (5) est disposé à distance de la poignée tournante (1), dans lequel la partie de boîtier (7) est associée à l'aimant (6) ou à l'élément d'appui (5), et dans lequel cette partie de boîtier (7) est aussi réalisée pour recevoir le capteur (11), la carte de circuits imprimés (9) et l'extrémité du faisceau de câbles (10), dans lequel entre la partie de boîtier (7) et l'extrémité de la poignée tournante (1) se trouve la partie de boîtier supplémentaire (8) qui est réalisée pour recevoir l'unité de commutation (12), dans lequel en outre le boîtier (2) avec la partie de boîtier (7) et la partie de boîtier supplémentaire (8) est divisé en parallèle à l'axe de rotation de la poignée tournante (1) en &a partie de boîtier supérieure (3) et la partie de boîtier inférieure (4) qui sont fixées l'une à l'autre et prennent aussi appui sur l'élément d'appui (5).

2. Dispositif selon la revendication 1, **caractérisé en ce que** le capteur (11) est disposé sur la carte de circuits imprimés (9).

3. Dispositif selon l'une quelconque des revendications précédentes, **caractérisé en ce que** la partie de boîtier (7) et/ou la partie de boîtier supplémentaire (8) présente(nt) au niveau de la partie de boîtier inférieure (4) un élargissement radial (13) pourvu d'une ouverture (15) accessible axialement.

4. Dispositif selon l'une quelconque des revendications précédentes, **caractérisé en ce que** l'élargissement radial (13) présente des éléments de guidage (14) pour recevoir la carte de circuits imprimés (9) et un élément de blindage.

5. Dispositif selon l'une quelconque des revendications précédentes, **caractérisé en ce que** l'ouverture (15) peut être fermée par un élément d'étanchéité.
